# EUROPÄISCHE PATENTSCHRIFT

(11) **EP 0 794 046 B1**
(45) Veröffentlichungstag und Bekanntmachung des Hinweises auf die Patenterteilung: **23.10.2002**
(21) Anmeldenummer: 97200661.3
(22) Anmeldetag: 05.03.1997
(51) Int. Cl.: B29C 45/16

(54) **Verfahren zur Herstellung von Kunststofferzeugnissen aus mindestens zwei Komponenten, Anlage und Spritzgiessform zur Ausführung des Verfahrens**
Process for producing plastic articles from at least two components, device and injection mould for executing the process
Procédé pour la fabrication de produits en matière plastique à partir de deux composantes, installation et moule à injection pour la réalisation du procédé

(30) Priorität: 08.03.1996 IT BZ960012
(43) Veröffentlichungstag der Anmeldung: 10.09.1997
(73) Patentinhaber: Seeber S.r.l., 39055 Laives (IT)
(72) Erfinder: Franzelin, Georg, 39055 Laives, Bozen (IT); Grandi, Palmiro, 39100 Bolzano (IT)
(74) Vertreter: Faraggiana, Vittorio, Dr. Ing.

(56) Entgegenhaltungen:
- DE-A1- 3 037 252
- DE-A1- 3 324 204
- GB-A- 1 112 736
- GB-A- 1 477 074
- GB-A- 1 565 655

## Beschreibung

Die vorliegende Erfindung betrifft ein Verfahren zur Herstellung von Kunststofferzeugnissen aus mindestens zwei Komponenten, gemäß dem Oberbegriff des Anspruchs 1, eine Anlage zur Ausführung des Verfahrens gemäß dem Oberbegriff des Anspruchs 3 und eine Spritzgußform gemäß dem Oberbegriff des Anspruches 11.

Bei den Kunststoffspritzgußmaschinen der herkömmlichen Art besteht das Problem, daß bei der Bildung von Teilen bzw. Erzeugnissen, die mindestens aus zwei Werkstoffen mit unterschiedlichen Eigenschaften zusammengesetzt sind, diese in die Gießform nacheinanderfolgend eingespritzt werden müssen. Dazu sind zur Zeit Maschinen bekannt, die für das Spritzgießen von Kunststoffen mit zwei sogenannten Plastifiziereinheiten bzw. Plastifizierzylindern mit Misch- und Förderschnecken versehen sind, die den Kunststoff in die Lage bringen, ihn jeweils über eine Düse in die Formnester einer Gießform einzuspritzen, die durch mindestens zwei Formhälften gebildet ist, um das in derselben eingespritzte und verfestigte Teil aus Kunststoff entnehmen zu können. Es bestehen nun herzustellende Teile, bei denen bestimmte Abschnitte in einem anderen Werkstoff ausgeführt werden müßten, beispielsweise im Fall, wo es sich um Kupplungselemente handelt, bei denen längs der Kupplungslinie die Möglichkeit bestehen sollte, das spritzgegossene Element selbst gegenüber einem Gegenelement, beispielsweise aus Blech abgedichtet zu halten.

Bis heute wurde in solchen Fällen entweder eine geeignet Dichtung vorgesehen, die einen beträchtlichen Aufwand sowohl bei der Bearbeitung der Dichtung als auch bei deren Montage mit sich brachte, oder diese Dichtung wurde nachfolgend am Basiskörper über eine weitere Plastifizierschnecke angespritzt, die seitlich von der ersten Schnecke angeordnet war, um wechselweise den die Dichtung bildenden Werkstoff einzuspritzen. So mußte man manchmal dem Basiselement nur Teile kleiner Abmessungen und gegenüber dem Körperwerkstoff geringerer Menge anspritzen, wozu eine Plastifizierschnecke bzw. eine Plastifiziereinheit erheblicher Abmessungen, teurer Konstruktion sowie mit einem Antrieb verwendet werden mußte, um Trägheitsmassen zu bewegen, die im wesentlichen gleich jenen der Hauptschnecke waren. So erforderte die Zugabe von Kunststoffen mit einem gegenüber dem Basiswerkstoff verschiedenem Verhalten kostspielige Maschinen, einen erheblichen Energiebedarf im Vergleich zum Spritzgießen des Hauptkörpers und vor allem unnötige Kosten, im Fall, wo eine Spritzgußmaschine für die Ausführung eines Kunststoffteiles aus einheitlichem Werkstoff verlangt wird, d.h., wo keine zweite Plastifiziereinheit benötigt wird.
Dieses Problem versuchte man zu lösen, indem seitlich der Spritzform eine Spritzeinheit angeordnet wurde, als ob man eine zweite Spritzgußmaschinen verwendet würde, um in dieselbe Spritzform einen Werkstoff mit Merkmalen einzuspritzen, die verschieden sind gegenüber jenen des Werkstoffes, der durch die erste Spritzgußmaschine eingespritzt wurde.

Die Aufgabe der vorliegenden Erfindung liegt daher darin, die oben angegebenen Probleme zu beheben, indem ein Verfahren vorgeschlagen wird, bei dem vermieden wird, daß bei der Herstellung eines Kunststofferzeugnisses, das aus mindestens zwei Werkstoffen verschiedener Merkmale besteht, überflüssige Massen gegenüber den zu gießenden Gewicht bewegt werden müssen, wobei Arbeitsmittel zum Spritzgießen von Erzeugnissen vorhanden sein sollen, die sich im richtigen Verhältnis zur Masse des effektiv einzuspritzenden Kunststoffes befinden und wobei sowohl die Herstellungskosten der auf die Herstellung bemessene Maschine als auch die Energie- und Wartungskosten drastisch herabgesetzt werden sollen.

Diese Aufgabe wird erfindungsgemäß durch ein Verfahren gemäß den kennzeichnenden Merkmalen des Anspruchs 1, durch eine Anlage gemäß dem kennzeichnenden Teil des Anspruchs 3 und durch eine Gießform gemäß den kennzeichnenden Merkmalen des Anspruchs 11 gelöst.

Durch Vorsehung eines Verfahrens, bei dem für jede einzuspritzende Kunststoffkomponente, deren Masse unterhalb einer Hauptkoniponente bzw. des Körpers des Erzeugnisses selbst liegt, eine der Menge der Masse selbst angepaßte Plastifiziereinheit verwendet wird, und durch Anbringung der Plastifiziereinheit selbst seitlich der Gießform, werden sowohl die Herstellungskosten der einzelnen Plastifiziereinheiten als auch die für die Herstellung verwendete Energie auf ein Minimum reduziert, wenn die kleinere verwendete Materialmenge als auch die Energiekosten zum Antrieb bzw. der Verstellung der einzelnen Plastifiziereinheiten in Betracht gezogen werden. Die anzubringenden oder unmittelbar an der Gießform zu befestigenden einzelnen Plastifiziereinheiten können gewissermaßen als getrennte Einheiten auch an anderen Spritzgußmaschinen verwendet werden, bei denen die jeweilige Gießform für die Seiteneinspritzung des Materials bereitgestellt wurde.

So kann in einer ersten Ausführungsform eine Anlage vorgesehen sein, die mit mindestens einer Plastifiziereinheit versehen ist, die an einer der Seiten der Spritzform zur Einspritzung einer der Werkstoffkomponenten angebracht ist.

In einer zweiten Ausführungsform ist die Plastifiziereinheit zur Einspritzung mindestens einer Komponente auf der festliegenden Formhälfte vorgesehen.

In einer dritten Ausführungsform ist die mindestens eine Plastifiziereinheit für mindestens eine weitere Werkstoffkomponente an der beweglichen Formhälfte befestigt.

Es liegt nahe, daß die eine oder die andere Formhälfte durch den Kern oder die Matritze der Spritzform selbst gebildet werden kann.

In einer weiteren Ausführungsform sind die Spritzeinheiten für die Einspritzung von Komponenten vorgesehen, die höchstens 20% der in eines der Formnester der Form selbst einzuspritzenden Gesamtmasse beträgt.

In einer weiteren Ausführungsform der erfindungsgemäßen Anlage ist jede Plastifiziereinheit mit einer elektronischen und öldynamischen Steuerzentrale sowohl für die Betätigung der Plastifiziereinheit als auch zur Koordination deren Bewegungen versehen.

In einer weiteren Ausführungsform der erfindungsgemäßen Anlage werden mindestens eine oder alle Plastifiziereinheiten über die elektronische und öldynamische Steuerzentrale der Hauptmaschine gesteuert.

Weitere Varianten der erfindungsgemäßen Anlage und Spritzgußform gehen aus den restlichen abhängigen Ansprüchen hervor.

Unter Bezugnahme auf die Zeichnung werden beispielsweise die Merkmale eines bevorzugten Ausführungsbeispieles einer erfindungsgemäßen in der Zeichnung dargestellten Spritzgußform beschrieben. Es zeigen,
- Figur 1: eine teilweise schematische Ansicht einer Spritzgußform, die in einer Kunststoffspritzgußmaschine montiert und mit einer erfindungsgemäßen Plastifiziereinheit versehen ist, und

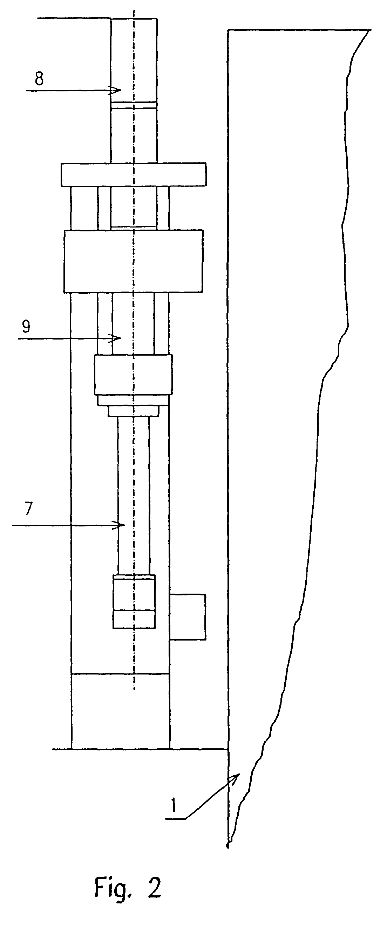

- Figur 2: eine Seitenansicht aus Figur 1.

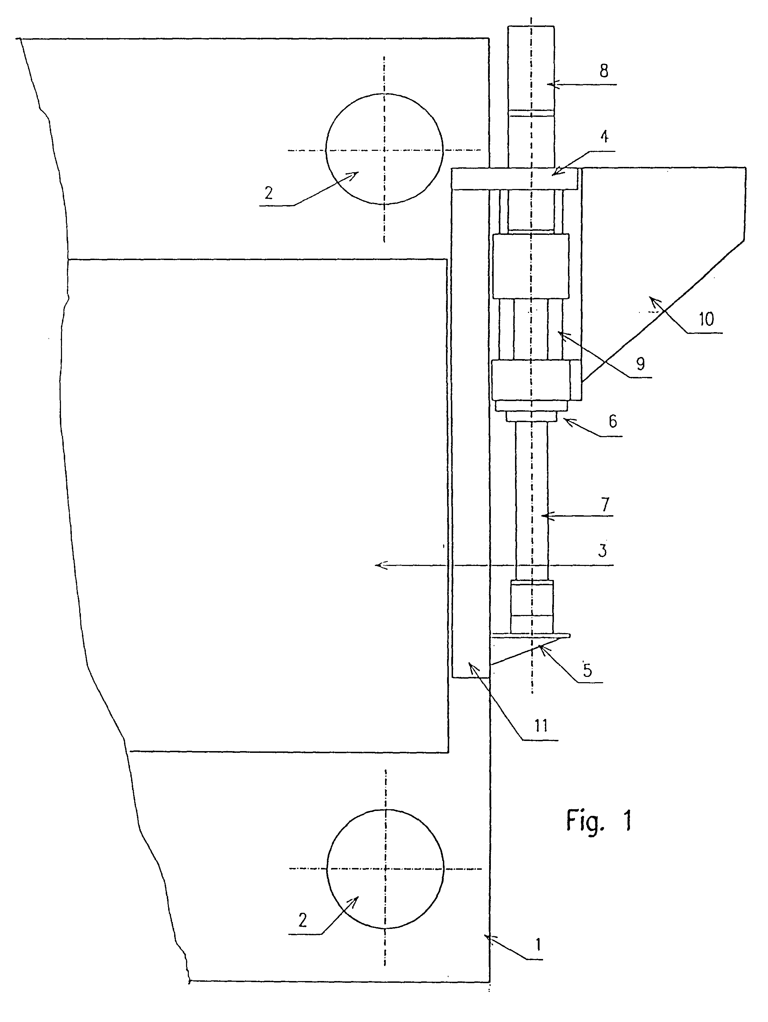

In Figur 1 ist mit der Bezugsnummer 1 ein Maschinengestell und mit der Bezugsziffer 2 sind die Holme einer Spritzgußpresse bekannter Art angegeben und sind daher nicht weiters dargestellt.

Von der Stirnseite ist eine Formhälfte 3 ersichtlich, die gleichfalls bekannter Art ist, was das Formnest betrifft, um den Werkstoff zur Bildung eines Erzeugnisses aufzunehmen, z.B. eines technisches Artikels der Automobilindustrie.

Die Formhälfte 3 ist seitlich mit einem oberen Träger 4 und mit Abstand von diesem mit einem unteren Träger 5 versehen, die zusammen eine Plastifiziereinheit 6, auch diese herkömmliche Art, tragen. Die Plastifiziereinheit 6 umfaßt einen Extruder 7, der auf bekannte Art und Weise durch einen Antrieb 8 verstellt wird, der längs vertikalen Gleitbolzen 9 zur Verstellung der nicht dargestellten Plastifizierschnecke gleitbar ist, um den von einem Trichter 10 kommenden Werkstoff einem Heißkanal 11 abzugeben, der das plastifizierte Material an die Einspritzstellen 12 zu verteilen, die ihrerseits auf nicht gezeigte, jedoch bekannte Weise durch Fließkanäle mit in der Spritzgußform zur Bildung des Erzeugnisses ausgenommenen Formnestern verbunden sind.

Auf zweckmäßige Art und Weise dient der untere Träger 5 auch als Verbindung zwischen Extruder 7 und Heißkanal 11, wobei in denselben zweckmäßige nicht gezeigte Durchgänge zur Verbindung zwischen der Düse der Plastifiziereinheit und dem Heißkanal 11 ausgenommen sind.

Auch nicht gezeigt ist die Steuerzentrale der erfindungsgemäß angewandten Plastifiziereinheit, die getrennt von der Steuerzentrale der Hauptmaschine vorgesehen, oder in derselben inbegriffen sein kann, um mit einem einzigen Prozessor die verschiedenen Schritte zur Einspritzung des Werkstoffes zu koordinieren.

Die Betriebsweise der erfindungsgemäßen Spritzgußform kann kurz wie folgt beschrieben werden:

Man nehme an, daß ein Erzeugnis spritzgegossen werden soll, das mit einem anderen Material mit anderen Merkmalen versehen sein muß, wie z.B. mit einer Dichtung, die sich längs des Kupplungsrandes zwischen dem spritzgegossenen Erzeugnis und einem Element erstreckt, auf dem das Erzeugnis angebracht werden muß. So wird anfangs der die erste Komponente des Erzeugnisses bildende Werkstoff eingespritzt, wobei das Formnest geschlossen oder jeweils durch einen Schieber gegenüber der zweiten Komponente isoliert wird. Nachdem die erste Komponente eingespritzt wurde, wird in einem Augenblick, der von der Art des Werkstoffes der zweiten einzuspritzenden Komponente abhängt, auch bezüglich seiner Verbindung mit der ersten Komponente, die über die Plastifiziereinheit 6 die zweite Komponente eingespritzt, wobei erst die Verbindung zwischen den beiden Komponenten geöffnet ist, indem auf zweckmäßige Art und Weise der bewegliche Schieber verstellt wird, dessen Bewegung durch den Prozessor der Maschine koordiniert wird. Da die erforderliche Materialmenge für die Hinzufügung einer Dichtung dieser Art gegenüber der Materialmenge der ersten Komponente minimal ist, wird durch Verwendung einer Plastifiziereinheit reduzierter, jedoch der Materialmenge selbst angepaßter Kapazität an Energie, Material und Bearbeitung gespart, vor allem wenn dazu auf herkömmliche Weise eigene seitliche Führungen für die Plastifiziereinheit vorgesehen werden, die seitlich zur Maschine einer Halle montiert werden.

Es ist klar, daß bei mehreren Komponenten für jede Komponente ein dazu geeignete Plastifiziereinheit vorgesehen werden kann, deren Abmessung klarerweise in Abhängigkeit auch der einzuspritzenden Materialmenge gewählt wird.

Es ist überdies möglich, um die Fließlänge des Materials bei der Seiteneinspritzung zu verkürzen, für isolierte Bereiche eines Erzeugnisses eine jeweilige Plastifiziereinheit vorzusehen, um möglichst viel Energie zu sparen, und dennoch das Material auf der für die Einspritzqualität richtige Temperatur zu halten.

Schließlich ist noch zu bemerken, daß die erfindungsgemäße Anlage es nicht nur erlaubt, die Energiekonsumkosten auf ein Minimum zu reduzieren, sondern es wird auch die Verweilzeit der in den verschiedenen Extrudern zu plastifizierenden Materialien auf ein Minimum gebracht, wobei weitgehend ein Abbau des zu plastifizierenden Materials vermieden wird und gleichzeitig eine höchstmögliche Qualität des herzustellenden Produktes sichergestellt wird.

## Patentansprüche

1. Verfahren zur Herstellung von Kunststofferzeugnissen aus mindestens zwei Komponenten, umfassend: die Einspritzung einer ersten Komponente über eine Plastifiziereinheit einer Spritzgußmaschine mit Isolierung eines Formnestes gegenüber dem mindestens eine Komponente aufnehmenden Hohlraum einer Spritzgießform; die Herstellung der Verbindung zwischen dem die erste Komponente aufnehmenden Hohlraum und dem Hohlraum der mindestens zweiten Komponente; und die Einspritzung der zweiten Komponente über eine mindestens zweite Plastifiziereinheit,
**dadurch gekennzeichnet, daß** die mindestens zweite Plastifiziereinheit an einer der Seiten der Spritzgußform angebracht ist.

2. Verfahren nach Anspruch 1, **dadurch gekennzeichnet, daß** die mindestens zweite Plastifiziereinheit wahlweise an einer der Seiten der festliegenden Formhälfte oder an jener der beweglichen angebracht ist.

3. Anlage zur Herstellung von Kunststofferzeugnissen aus mindestens zwei Komponenten, zur Ausführung des Verfahrens nach den vorstehenden Ansprüchen, **dadurch gekennzeichnet, daß** sie mit mindestens einer weiteren Plastifiziereinheit versehen ist, die an einer der Seiten der Spritzgußform zur Einspritzung der weiteren Komponenten angebracht ist.

4. Anlage nach Anspruch 3, **dadurch gekennzeichnet, daß** die weitere Plastifiziereinheit zur Einspritzung der mindestens einen weiteren Komponente an der festliegenden Formhälfte vorgesehen ist.

5. Anlage nach Anspruch 3, **dadurch gekennzeichnet, daß** die mindestens eine weitere Plastifiziereinheit an der beweglichen Formhälfte befestigt ist.

6. Anlage nach Anspruch 4 und 5, **dadurch gekennzeichnet, daß** die Formhälfte durch den Kern der Spritzgußform selbst gebildet ist.

7. Anlage nach Anspruch 4 und 6, **dadurch gekennzeichnet, daß** die Formhälfte durch die Matritze der Spritzgußform selbst gebildet ist.

8. Anlage nach Anspruch 3 bis 7, **dadurch gekennzeichnet, daß** die weiteren Plastifiziereinheiten zur Einspritzung von Komponenten vorgesehen sind, die höchstens 20% der einzuspritzenden Gesamtmassen in eine der Formnester der Spritzgußform betragen.

9. Anlage nach den vorstehenden Ansprüchen, **dadurch gekennzeichnet, daß** jede weitere Plastifiziereinheit mit einer eigenen elektronischen und öldynamischen Steuerzentrale versehen ist, um so die Plastifiziereinheit als autonome Einheit wirken zu lassen.

10. Anlage nach den vorstehenden Ansprüchen, **dadurch gekennzeichnet, daß** mindestens eine oder alle weiteren Plastifiziereinheiten durch die elektronische und öldynamische Steuerzentraleinheit der Hauptmaschine gesteuert werden.

11. Spritzgußform nach den vorstehenden Ansprüchen,
**dadurch gekennzeichnet, daß** sie mindestens an einer ihrer Seiten mit mindestens einem Träger versehen ist, der eine Plastifiziereinheit bekannter Art stabil trägt, die mit dem Hohlraum des Formnestes verbunden ist, das die weitere Materialkomponente aufnimmt.

12. Spritzgußform nach Anspruch 11, **dadurch gekennzeichnet, daß** bei vertikaler Anordnung, die entsprechende Seite der Spritzgußform mit einem oberen Träger (4) und mit einem unteren Träger (5) versehen ist, die zusammen die entsprechende Plastifiziereinheit (6) stabil tragen, wobei der untere Träger (5) die Verbindung des plastifizierten Materials mit einem Heißkanal (11) bildet, der das plastifizierte Material durch die Einspritzstellen (12) an den Hohlraum des zu füllenden Formnestes verteilt.

## Claims

1. Method of producing plastics material products from at least two components, said method including: the injection of a first component via a plasticising unit of an injection moulding machine, with a mould cavity being insulated from the hollow space of an injection mould assembly accommodating at least one component; the establishment of the connection between the hollow space accommodating the first component and the hollow space of the at least second component; and the injection of the second component via one at least second plasticising unit, **characterised in that** the at least second plasticising unit is attached to one of the sides of the injection mould assembly.

2. Method according to claim 1, **characterised in that** the at least second plasticising unit is selectively attached to one of the sides of the stationary mould half or to that side of the displaceable mould half.

3. System for producing plastics material products from at least two components, in order to accomplish the method according to the preceding claims, **characterised in that** it is provided with at least one additional plasticising unit which is attached to one of the sides of the injection mould assembly for the injection of the additional components.

4. System according to claim 3, **characterised in that** the additional plasticising unit is provided for the injection of the at least one additional component on the stationary mould half.

5. System according to claim 3, **characterised in that** the at least one additional plasticising unit is mounted on the displaceable mould half.

6. System according to claims 4 and 5, **characterised in that** the mould half is formed by the core of the injection mould assembly itself.

7. System according to claims 4 and 6, **characterised in that** the mould half is formed by the female die of the injection mould assembly itself.

8. System according to claims 3 to 7, **characterised in that** the additional plasticising units are provided for the injection of components which amount, at most, to 20 % of the total substances to be injected into one of the mould cavities of the injection mould assembly.

9. System according to the preceding claims, **characterised in that** each additional plasticising unit is provided with its own electronic and oil-dynamic control centre, so as to allow the plasticising unit to act as an autonomous unit.

10. System according to the preceding claims, **characterised in that** at least one or all of the additional plasticising units is or are controlled by the electronic and oil-dynamic central control unit of the main machine.

11. Injection mould assembly according to the preceding claims, **characterised in that** it is provided, at least on one of its sides, with at least one carrier which carries a plasticising unit of known type in a stable manner, which unit is connected to the hollow space of the mould cavity which accommodates the additional material component.

12. Injection mould assembly according to claim 11, **characterised in that**, in the case of a vertical disposition, the corresponding side of the injection mould assembly is provided with an upper carrier (4) and with a lower carrier (5), which carriers together carry the corresponding plasticising unit (6) in a stable manner, the lower carrier (5) forming the connection between the plasticised material and a heated channel (11), which distributes the plasticised material through the injection locations (12) to the hollow space of the mould cavity to be filled.

## Revendications

1. Procédé de fabrication d'articles en matière plastique constitués d'au moins deux composants, comprenant les étapes consistant à :
- injecter un premier composant via une unité de plastification d'une machine de moulage par injection en isolant une empreinte de moule de l'espace creux, recevant ledit au moins un composant, d'un moule pour moulage par injection ;
- réaliser la liaison entre l'espace creux recevant le premier composant et l'espace creux destiné audit au moins un deuxième composant ; et
- injecter le deuxième composant via au moins une deuxième unité de plastification,
**caractérisé en ce que** ladite au moins une deuxième unité de plastification est appliquée sur un des côtés du moule pour moulage par injection.

2. Procédé selon la revendication 1, **caractérisé en ce que** ladite au moins une deuxième unité de plastification est appliquée au choix sur un des côtés de la moitié de moule fixe, ou sur un des côtés de la moitié de moule mobile.

3. Installation de fabrication d'articles en matière plastique constitués de deux composants, destinée à mettre en oeuvre le procédé selon les revendications précédentes, **caractérisée en ce qu'**il est prévu au moins une unité de plastification supplémentaire qui est appliquée sur un des côtés du moule pour moulage par injection, en vue d'injecter les autres composants.

4. Installation selon la revendication 3, **caractérisée en ce que** l'unité de plastification supplémentaire destinée à injecter ledit au moins un deuxième composant est prévue au niveau de la moitié de moule fixe.

5. Installation selon la revendication 3, **caractérisée en ce que** ladite au moins une unité de plastification supplémentaire est fixée à la moitié de moule mobile.

6. Installation selon l'une des revendications 4 et 5, **caractérisée en ce que** la moitié de moule est formée par le noyau du moule pour moulage par injection lui-même.

7. Installation selon l'une des revendications 4 et 6, **caractérisée en ce que** la moitié de moule est formée par la matrice du moule pour moulage par injection lui-même.

8. Installation selon l'une des revendications 3 à 7, **caractérisée en ce qu'**il est prévu des unités de plastification supplémentaires, destinées à l'injection de composants, qui représentent au plus 20% de la masse totale à injecter dans une des empreintes du moule pour moulage par injection.

9. Installation selon l'une des revendications précédentes, **caractérisée en ce que** chaque unité de plastification supplémentaire est dotée de sa propre unité centrale de commande électronique ou oléodynamique pour permettre à l'unité de plastification de fonctionner de façon autonome.

10. Installation selon l'une des revendications précédentes, **caractérisée en ce que** ladite au moins unité de plastification supplémentaire ou toutes les unités de plastification supplémentaires sont commandées par l'unité centrale de commande électronique et oléodynamique.

11. Moule pour moulage par injection selon l'une des revendications précédentes, **caractérisé en ce qu'**il est doté au moins sur un de ses côtés d'au moins un support qui supporte une unité de plastification de type connu qui est reliée à l'espace creux de l'empreinte de moule qui reçoit l'autre composant.

12. Moule pour moulage par injection selon la revendication 11, **caractérisé en ce que**, en cas d'agencement vertical, le côté correspondant du moule pour moulage par injection est doté d'un support supérieur (4) et d'un support inférieur (5) qui supportent ensemble de façon stable l'unité de plastification (6) correspondante, le support inférieur (5) formant la liaison de la matière plastifiée avec un canal chaud (11) qui distribue le matériau plastifié à travers les emplacements d'injection (12) au niveau de l'espace creux de l'empreinte de moule à remplir.
